# EUROPEAN PATENT SPECIFICATION

(11) **EP 4 166 590 B1**
(45) Date of publication and mention of the grant of the patent: **25.06.2025**
(21) Application number: 21825285.6
(22) Date of filing: 25.05.2021
(51) Int. Cl.: C08G 18/28, C08G 18/64, C08G 18/73, C08G 18/75, C08G 18/80, C09D 175/12, C08G 59/18, C08G 59/06, C09D 163/00, C09D 5/44, C09D 7/43, C08G 59/14, C08G 59/40

(54) **METHOD FOR PRODUCING EPOXY VISCOUS AGENT FOR CATIONIC ELECTRODEPOSITION COATING MATERIAL**
VERFAHREN ZUR HERSTELLUNG EINES VISKOSEN EPOXIDMITTELS FÜR KATIONISCHE ELEKTROTAUCHLACKIERUNG
PROCÉDÉ DE PRODUCTION D'AGENT VISQUEUX ÉPOXYDIQUE POUR MATÉRIAU DE REVÊTEMENT PAR ÉLECTRODÉPOSITION CATIONIQUE

(30) Priority: 15.06.2020 JP 2020103009
(43) Date of publication of application: 19.04.2023
(73) Proprietor: Nippon Paint Automotive Coatings Co., Ltd., Hirakata-shi, Osaka 573-1153 (JP)
(72) Inventor: SHIMODAIRA, Yosuke, Hirakata-shi, Osaka 573-1153 (JP); AKAGI, Saki, Hirakata-shi, Osaka 573-1153 (JP); MIYAMAE, Nobuhiro, Hirakata-shi, Osaka 573-1153 (JP)
(74) Representative: Mewburn Ellis LLP
(86) International application number: PCT/JP2021/019850
(87) International publication number: WO 2021/256193

(56) References cited:
- JP-A- 2010 144 104
- JP-A- 2018 159 031
- JP-A- 2018 159 032
- JP-A- 2020 180 282
- JP-A- H04 220 171

## Description

### TECHNICAL FIELD

The present invention is an invention relating to a method for producing an epoxy viscosity agent to be used for a cationic electrodeposition coating material, and particularly relates to a cationic electrodeposition coating technique having a high edge corrosion resistance.

### BACKGROUND ART

Cationic electrodeposition coating materials are frequently used as undercoating materials for imparting corrosion resistance to industrial products such as automobiles. Even with a cationic electrodeposition coating material having a high corrosion resistance, at a sharp portion such as a cut surface of a metal plate, there is a disadvantage that the coating film amount at a tip portion is not enough and the portion is inferior in corrosion resistance to other portions due to an action such as shrinkage during the curing of the cationic electrodeposition coating material.

JP-A-2010-144104 (Patent Literature 1) discloses a cationic electrodeposition coating composition comprising (a) an amine-modified epoxy resin having an amine concentration of 1.0 mol/kg or more, (b)a blocked isocyanate compound, and (c) cation-exchanged amorphous silica fine particles as essential components. This cationic electrodeposition coating composition is disclosed to be able to form a coating film superior in an edge covering property to an article to be coated and smoothness (e.g., paragraph [0001]). Patent Literature 1 discloses that the edge covering property can be enhanced through development of structurally viscous behavior derived from the component (c) (e.g., [0029]). On the other hand, since the resin component and the component (c) that are to form a coating film are low in compatibility, aggregation occurs in the electrodeposition coating composition, and therefore, a resulting coating film may be poor in smoothness. For example, in paragraph [0032], it is disclosed that an excessively large amount of the component (c) will impair the smoothness.

A cationic electrodeposition coating composition comprising an aminated epoxy resin and a blocked isocyanate is known from JP 2018 159031 A (Patent Literature 2).

### CITATION LIST

### PATENT LITERATURE

Patent Literature 1: JP-A-2010-144104 Patent Literature 2: JP 2018 159031 A

### SUMMARY OF INVENTION

### TECHNICAL PROBLEMS

Unlike Patent Literature 1, an object of the present invention is to improve edge corrosion resistance without using silica particles or the like.

### SOLUTIONS TO PROBLEMS

The present inventors have found that when an epoxy viscosity agent based on an epoxy resin is produced by a new production method and blended in a cationic electrodeposition coating composition, the amount of loss of an edge part of an electrodeposition coating film is improved. Specifically, the present invention provides a method for producing an epoxy viscosity agent for a cationic electrodeposition coating material, the method comprising:
(1) an amine modification step of obtaining an amine-modified epoxy resin by reacting an amine compound with a chain-extended epoxy resin that is obtained by chain-extending a polyphenol polyglycidyl ether type epoxy resin and that has a proportion of a fraction having a relative molecular weight of 100,000 or more determined by gel permeation chromatography (GPC) of 13.0 to 18.0% by mass;
(2) a dispersion step of neutralizing some or all of the amino groups of the resulting amine-modified epoxy resin with an acid and dispersing the resin in a water solvent; and
(3) a high molecular weight achievement step of mixing and reacting the resulting dispersion with a polyphenol polyglycidyl ether type epoxy resin to obtain an epoxy viscosity agent.

The present invention further provides the following embodiments.

The amine compound comprises a secondary amine and a ketimine derivative, a weight ratio of the secondary amine/all amine compounds is 0.20 to 0.50, and a weight ratio of the ketimine derivative/all amine compounds is 0.30 to 0.80.

The chain-extended epoxy resin to be reacted with the amine compound in the amine modification step (1) is a resin obtained by chain-extending a polyphenol polyglycidyl ether type epoxy resin with a polycyclic phenol compound.

The chain-extended epoxy resin to be reacted with an amine compound in the amine modification step (1) is a resin obtained by chain-extending a polyphenol polyglycidyl ether type epoxy resin with a polycyclic phenol compound and a polyethylene oxide group-containing epoxy resin, and
the amount of a polypropylene oxide group-containing epoxy resin contained in 100 parts by mass of the chain-extended epoxy resin is 1 to 40 parts by mass.

The present invention also provides a cationic electrodeposition coating composition comprising an aminated epoxy resin (A), an epoxy viscosity agent (B) obtained by the above production method, and a blocked polyisocyanate curing agent (C).

### ADVANTAGEOUS EFFECTS OF INVENTION

The cationic electrodeposition coating composition of the present invention can be applied as a thick film (specifically, having a thickness of 35 µm or more, or especially having a thickness of 40 µm) for improving a rust prevention property and chipping. In the present invention, by controlling the molecular weight of a specific epoxy resin to prepare an epoxy viscosity agent and blending the epoxy viscosity agent into a cationic electrodeposition coating composition, it was possible to impart a higher edge corrosion resistance than that of conventional techniques. It is considered that as a result of forming an epoxy viscosity agent with a widened molecular weight distribution and blending this into a cationic electrodeposition coating composition, entanglement of a matrix resin occurred, whereby it was made possible to form a thicker film, so that the loss of film thickness was reduced even at an edge part. The epoxy viscosity agent of the present invention is defined by the production method thereof. This is because it is difficult to define the epoxy viscosity agent by material and the difference from the conventional technique is not made clear by the definition by material.

### BRIEF DESCRIPTION OF DRAWINGS

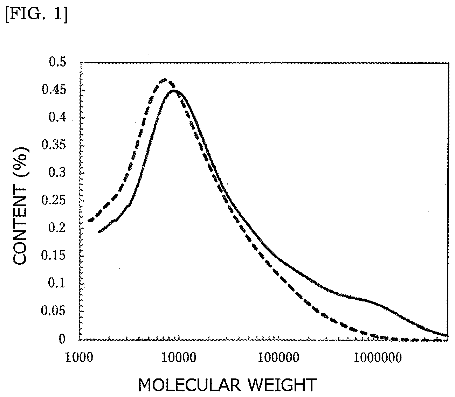

FIG. 1 is a graph showing a relative molecular weight distribution curve (dotted line) in gel permeation chromatography (GPC) in the chain extension of a common epoxy resin and a relative molecular weight distribution curve (solid line) in gel permeation chromatography (GPC) in the chain extension of the epoxy resin of the present invention, in which the horizontal axis represents the molecular weight and the vertical axis represents the content (%).

### DESCRIPTION OF EMBODIMENTS

The present invention provides a method for producing an epoxy viscosity agent to be blended in a cationic electrodeposition coating composition mainly comprising an aminated epoxy resin and a blocked polyisocyanate curing agent, and the method comprises:
(1) an amine modification step of obtaining an amine-modified epoxy resin by reacting an amine compound with a chain-extended epoxy resin that is obtained by chain-extending a polyphenol polyglycidyl ether type epoxy resin and that has a proportion of a fraction having a relative molecular weight of 100,000 or more determined by gel permeation chromatography (GPC) of 13.0 to 18.0% by mass;
(2) a dispersion step of neutralizing some or all of the amino groups of the resulting amine-modified epoxy resin with an acid and dispersing the resin in a water solvent; and
(3) a high molecular weight achievement step of mixing and reacting the resulting dispersion with a polyphenol polyglycidyl ether type epoxy resin to obtain an epoxy viscosity agent.

The present invention also provides a cationic electrodeposition coating composition comprising an aminated epoxy resin (A), an epoxy viscosity agent (B) obtained by the above method, and a blocked polyisocyanate curing agent (C).

In the case of describing the present invention, the description should be started with the characteristic method for producing an epoxy viscosity agent of the present invention, but since the epoxy viscosity agent also finally forms a cationic electrodeposition coating composition, the aminated epoxy resin (A) that is a component of the cationic electrodeposition coating composition obtained in the present invention is first described for convenience of description.

### <Aminated epoxy resin (A)>

The aminated epoxy resin (A) is a coating film-forming resin for constituting a cationic electrodeposition coating film. As the aminated epoxy resin, an epoxy resin obtained by modifying an oxirane ring (also referred to as "epoxy group") in an epoxy resin skeleton with an amine compound is preferable. Generally, an aminated epoxy resin is prepared by ring-opening an oxirane ring in a starting epoxy resin molecule via a reaction with an amine compound such as a primary amine, secondary amine or tertiary amine and/or an acid salt thereof. Typical examples of the starting epoxy resin include polyphenol polyglycidyl ether type epoxy resins, which are reaction products of polycyclic phenol compounds, such as bisphenol A, bisphenol F, bisphenol S, phenol novolac, and cresol novolac, with epichlorohydrin. Other examples of the starting epoxy resin include the oxazoline ring-containing epoxy resins disclosed in JP-A-5-306327. Such epoxy resins can be prepared via a reaction of a diisocyanate compound or a bisurethane compound obtained by blocking the isocyanate groups of a diisocyanate compound with a lower alcohol such as methanol and ethanol, with epichlorohydrin.

The starting epoxy resin may be used after being chain-extended with a bifunctional polyester polyol, a polyether polyol, a bisphenol, a dibasic carboxylic acid, or the like before the ring opening reaction of oxirane rings with an amine compound.

The starting raw material resin also may be used after being subjected to the addition of a monohydroxy compound such as 2-ethylhexanol, nonylphenol, ethylene glycol mono-2-ethylhexyl ether, ethylene glycol mono-n-butyl ether, propylene glycol mono-2-ethylhexyl ether, or a monocarboxylic acid such as octylic acid to some oxirane rings for the purpose of controlling a molecular weight or an amine equivalent or improving heat flowability, before the ring opening reaction of oxirane rings with an amine compound.

An aminated epoxy resin is obtained by reacting oxirane rings of the above epoxy resin with an amine compound. Examples of the amine compound to be reacted with oxirane rings include primary amines and secondary amines. If an epoxy resin is reacted with a secondary amine, an amine-modified epoxy resin having a tertiary amino group is obtained. If an epoxy resin is reacted with a primary amine, an amine-modified epoxy resin having a secondary amino group is obtained. Furthermore, by using a secondary amine having a blocked primary amine, an amine-modified epoxy resin having a primary amino group can be prepared. For example, the preparation of an amine-modified epoxy resin having a primary amino group and a secondary amino group may be carried out by blocking the primary amino group with a ketone to form a ketimine before the reacting it with an epoxy resin, then introducing it into an epoxy resin, and then performing deblocking. As the amine to be reacted with the oxirane rings, a tertiary amine may optionally be used in combination.

Examples of the amine compound include a primary amine, secondary amine, or tertiary amine and/or an acid salt thereof, such as butylamine, octylamine, diethylamine, dibutylamine, methylbutylamine, monoethanolamine, diethanolamine, N-methylethanolamine, N-ethylethanolamine, triethylamine, N,N-dimethylbenzylamine, and N,N-dimethylethanolamine. Examples of the secondary amine having a blocked primary amine include a ketimine of aminoethylethanolamine and a diketimine of diethylenetriamine. Examples of the tertiary amine which may optionally be used include triethylamine, N,N-dimethylbenzylamine, and N,N-dimethylethanolamine. These amines may be used singly, or two or more of them may be used in combination.

The amine compound to be reacted with oxirane rings of the epoxy resin is preferably one containing 50 to 95% by mass of a secondary amine, 0 to 30% by mass of a secondary amine having a blocked primary amine, and 0 to 20% by mass of a primary amine.

The number-average molecular weight of the aminated epoxy resin is preferably in a range of 1,000 to 5,000. Due to the condition that the number-average molecular weight is 1,000 or more, a cured electrodeposition coating film having good physical properties such as solvent resistance and corrosion resistance is obtained. On the other hand, due to the condition that the number-average molecular weight is 5,000 or less, it becomes easy to adjust the viscosity of the aminated epoxy resin and possible to perform smooth synthesis, and it becomes easy to handle emulsification and dispersion of the resulting aminated epoxy resin. The number-average molecular weight of the aminated resin is preferably in a range of 2,000 to 3,500.

The aminated epoxy resin preferably has an amine value in a range of 20 to 100 mg KOH/g. Due to the condition that the amine value of the aminated epoxy resin is 20 mg KOH/g or more, the emulsification-dispersion stability of the aminated resin in an electrodeposition coating composition is good. On the other hand, due to the condition that the amine value is 100 mg KOH/g or less, a proper number of amino groups are present in a cured electrodeposition coating film and a possibility to lower the water resistance of a coating film is eliminated. The amine value of the aminated epoxy resin is more preferably in a range of 20 to 80 mg KOH/g.

The aminated epoxy resin preferably has a hydroxyl value in a range of 150 to 650 mg KOH/g. Due to the condition that the hydroxyl value is 150 mg KOH/g or more, good curing of a cured electrodeposition coating film occurs and the coating film appearance is also improved. On the other hand, due to the condition that the hydroxyl value is 650 mg KOH/g or less, a proper number of hydroxyl groups remain in a cured electrodeposition coating film and there is no possibility to lower the water resistance of a coating film. The hydroxyl value of the aminated epoxy resin is more preferably in a range of 150 to 400 mg KOH/g.

The aminated epoxy resin may optionally comprise an amino group-containing acrylic resin, an amino group-containing polyester resin, or the like.

### <Epoxy viscosity agent (B)>

The epoxy viscosity agent of the present invention is produced on the basis of the above-described method for producing the aminated epoxy resin and by a production method including the following three steps:
(1) an amine modification step of obtaining an amine-modified epoxy resin by reacting an amine compound with a chain-extended epoxy resin that is obtained by chain-extending a polyphenol polyglycidyl ether type epoxy resin and that has a proportion of a fraction having a relative molecular weight of 100,000 or more determined by gel permeation chromatography (GPC) of 13.0 to 18.0% by mass;
(2) a dispersion step of neutralizing some or all of the amino groups of the resulting amine-modified epoxy resin with an acid and dispersing the resin in a water solvent; and
(3) a high molecular weight achievement step of mixing and reacting the resulting dispersion with a polyphenol polyglycidyl ether type epoxy resin to obtain an epoxy viscosity agent.

The starting epoxy resin is a polyphenol polyglycidyl ether type epoxy resin, which is a reaction product of a polycyclic phenol compound, such as bisphenol A, bisphenol F, bisphenol S, phenol novolac, and cresol novolac, with epichlorohydrin. In the present invention, as the polyphenol polyglycidyl ether type epoxy resin, one having been subjected to chain extension reaction with a polycyclic phenol compound is used. The reaction condition under which the polyphenol polyglycidyl ether type epoxy resin and the polycyclic phenol compound are made to undergo a chain extension reaction can be appropriately chosen according to the stirring apparatus to be used, a reaction scale, etc. Examples the reaction condition include a condition where the reaction is carried out at 85 to 180°C for 0.1 to 8 hours, preferably at 100 to 150°C for 2 to 8 hours. As the stirring apparatus to be used, a stirrer that is commonly used in the field of coating material can be used.

The polyphenol polyglycidyl ether type epoxy resin may partially be made to undergo, before the amination, a chain extension reaction partly with a bifunctional polyester polyol, a polyether polyol (for example, a polyol having a polyethylene oxide group and a polyol having a polypropylene oxide group), a dibasic carboxylic acid, or the like. For example, when performing a chain extension reaction using a polyol having a polypropylene oxide group, a polypropylene oxide group-containing epoxy resin is formed. Examples of this embodiment include a state where the polyphenol polyglycidyl ether type epoxy resin, the polycyclic phenol compound, and the polypropylene oxide group-containing epoxy resin have undergone a reaction (chain extension reaction). The content of the polyethylene oxide group-containing epoxy resin in the case of chain extension with the polyethylene oxide group-containing epoxy resin is preferably 1 to 40 parts by mass, and more preferably 15 to 40 parts by mass, based on 100 parts by mass of the epoxy resin. The one chain-extended with an ethylene oxide group-containing epoxy resin tends to have a higher edge corrosion resistance.

In the present invention, it is required that the proportion of a fraction having a relative molecular weight of 100,000 or more determined by GPC of the epoxy resin chain-extended as described above (this may also be referred to as a "chain-extended epoxy resin") is 13.0 to 18.0% by mass. Usually, when a chain extension reaction is performed, a relative molecular weight by GPC often shows a monodispersed molecular weight distribution as shown by a dotted line in FIG. 1. There is a molecular weight distribution peak in a region where the molecular weight is not more than 100,000, and there are molecules having a molecular weight more than 100,000, but the amount thereof decreases. In contrast, this does not apply to the present invention. It is necessary in the present invention that there is a molecular weight distribution peak in a region where the relative molecular weight by GPC is more than 100,000 with molecules with a relative molecular weight of more than 100,000 existing in an amount of 13.0 to 18.0% by mass, preferably 14.0 to 17.0% by mass, and more preferably 15.0 to 16.0% by mass. In FIG. 1, the case of the present invention where the content of the fraction with a relative molecular weight by GPC of 100,000 or more is large is shown by a solid line. FIG. 1 is illustrated schematically to some extent for explanation, and does not necessarily represent an actual molecular weight distribution, but is close to an actual measured value. When the amount of GPC having a relative molecular weight of 100,000 or more is less than 13.0 mass%, the edge covering of the electrodeposition coating film is not different from the conventional level, and the edge corrosion resistance is insufficient. Conversely, when the proportion of molecules with a relative molecular weight by GPC of 100,000 or more exceeds 18% by mass, the appearance of an electrodeposition coating film is deteriorated, and manufacturability, storage stability, and the like are deteriorated.

When chain-extending an epoxy resin, in order to make a larger amount of molecules having a high relative molecular weight is contained, the chain extension reaction is performed while increasing the reaction time, increasing the reaction temperature, or increasing the amount of a catalyst. When the reaction time of the chain extension reaction is usually in a range of 4.0 to 10.0 hours, preferably 5.0 to 7.0 hours, the molecular weight of the chain-extended epoxy resin can fall within the above range. When controlling by a reaction temperature, the reaction temperature is 140 to 190°C, preferably 150 to 180°C, and more preferably 160 to 170°C. Furthermore, the amount of the catalyst is 1.5 to 5.0 times, preferably 2.0 to 4.0 times, and more preferably 2.0 to 3.0 times the usual amount. As the catalyst, a catalyst to be used for a common reaction between an epoxy group and an alcohol group is suitably used, and examples thereof include N,N-dimethylbenzylamine, N,N-dimethylethanolamine, N,N-diethylbenzylamine, triethylamine, and 2-ethyl-4-methylimidazole.

An aminated epoxy resin is obtained by reacting oxirane rings of the above epoxy resin with an amine compound (an amine modification step). Examples of the amine compound to be reacted with oxirane rings include primary amines and secondary amines. If an epoxy resin is reacted with a secondary amine, an amine-modified epoxy resin having a tertiary amino group is obtained. If an epoxy resin is reacted with a primary amine, an amine-modified epoxy resin having a secondary amino group is obtained. Furthermore, by using a secondary amine having a blocked primary amine, an amine-modified epoxy resin having a primary amino group can be prepared. For example, the preparation of an amine-modified epoxy resin having a primary amino group and a secondary amino group may be carried out by blocking the primary amino group with a ketone to form a ketimine before the reacting it with an epoxy resin, then introducing it into an epoxy resin, and then performing deblocking. As the amine to be reacted with the oxirane rings, a tertiary amine may optionally be used in combination.

Examples of the primary amine and the secondary amine include butylamine, octylamine, diethylamine, dibutylamine, methylbutylamine, monoethanolamine, diethanolamine, N-methylethanolamine, and diethylenetriamine. Examples of the secondary amine having a blocked primary amine include ketimine derivatives such as a ketimine of aminoethylethanolamine and a diketimine of diethylenetriamine. Examples of the tertiary amine which may optionally be used include triethylamine, N,N-dimethylbenzylamine, and N,N-dimethylethanolamine. These amines may be used singly, or two or more of them may be used in combination.

Specifically, the amine compound to be used in the present invention is preferably a mixture of a secondary amine having a hydroxyl group in order to secure a hydroxyl value and an amine compound having a ketimine group (a ketimine derivative of an amine compound) in order to secure a primary amino group required for reacting with an epoxy resin (specifically, a polyphenol polyglycidyl ether type epoxy resin) in the subsequent high molecular weight achievement step (3). Therefore, more specifically, the amine compound is most preferably a combination of a secondary amine having a hydroxyl group containing diethanolamine and methylethanolamine and a ketimine derivative of an amine compound containing diketimine of diethylenetriamine. Of course, the above-described various amine compounds may be blended in order to secure an amine value and a hydroxyl value, as necessary. The secondary amine is blended in an amount of 0.20 to 0.50, preferably 0.30 to 0.40 in weight ratio based on all amine compounds (the secondary amine/all amine compounds), and the ketimine derivative is blended in an amount of 0.30 to 0.80, preferably 0.50 to 0.75 in weight ratio based on all amine compounds (the ketimine derivative/all amine compounds).

In the amine modification step (1), the amount of the amine compound to be reacted with the epoxy resin is preferably in an amount of 0.9 to 1.2 equivalents per 1 equivalent of the epoxy groups of the epoxy resin. Regarding the "the equivalent of an amine compound", calculation is carried out with 1 mole of the ketimine derivative being taken as 1 equivalent.

In the present invention, the amine compound to be reacted in the amine modification step (1) preferably contains the ketimine derivative in the range of 30 to 100 mole%, preferably 30 to 80 mol%, and more preferably 30 to 50 mol% based on the total molar amount of the amine compound. When the amine compound contains the ketimine derivative in the above range, it is possible to suitably adjust the number-average molecular weight of a resulting epoxy viscosity agent in a range of 100,000 to 10,000,000. When the amount of the ketimine derivative relative to the total amount of the amine compound is less than 30 mole%, an increased amount of low molecular weight epoxy components will remain, so that coating film curability may be deteriorated.

When the amine compound contains amine compounds other than ketimine derivatives, the molar ratio of a secondary amine to a primary amine is preferably in a range of (the secondary amine) : (the primary amine) = 40 to 70 mole% : 30 to 60 mol% in the amine compounds other than the ketimine derivatives.

The reaction condition under which the epoxy resin is reacted with the amine compound to effect amine modification can be chosen appropriately according to the reaction scale, etc. Examples the reaction condition include a condition where the reaction is carried out preferably at 80 to 150°C for 0.1 to 5 hours, more preferably at 120 to 150°C for 0.5 to 3 hours.

After an amine compound including a ketimine derivative is introduced into an epoxy resin through an amine modification reaction, an amino group such as a primary amino group which had been blocked is regenerated by deblocking a blocking agent such as a ketone possessed by the ketimine derivative. The blocking agent is deblocked by hydrolysis during acid neutralization and dispersion in the acid neutralization and dispersion step described below.

In the present invention, the epoxy viscosity agent (B) of the present invention is obtained via a dispersion step (2) of neutralizing some or all of the amino groups of the amine-modified epoxy resin obtained in the amine modification step (1) with an acid and dispersing the resin in a water solvent, and further a high molecular weight achievement step (3) of mixing and reacting the resulting dispersion with a polyphenol polyglycidyl ether type epoxy resin.

Examples of the neutralizing acid to be used in the dispersion step (2) include organic acids such as methanesulfonic acid, sulfamic acid, lactic acid, dimethylol propionic acid, formic acid, and acetic acid. In the present invention, it is more preferable to neutralize the resin emulsion containing the aminated epoxy resin obtained in the amine modification step (1) with one or more acids selected from the group consisting of formic acid, acetic acid, and lactic acid.

The neutralizing acid is more preferably used in an amount of 10 to 100%, even more preferably 20 to 70%, in the equivalent ratio of the neutralizing acid to the equivalent of the amino groups of the aminated epoxy resin. In the present description, the equivalent ratio of the neutralizing acid to the equivalent of the amino groups of the aminated epoxy resin is taken as the neutralization ratio. Due to the condition that the neutralization ratio is 10% or more, the affinity to water is secured and good dispersibility in water is obtained.

In the present invention, the dispersion obtained in the dispersion step (2) is mixed with a polyphenol polyglycidyl ether type epoxy resin and reacted. This step is the high molecular weight achievement step (3). In the high molecular weight achievement step (3), some of the amino groups of the amine-modified epoxy resin react with the oxirane rings of the polyphenol polyglycidyl ether type epoxy resin to further increase the molecular weight. In the high molecular weight achievement, all the polyphenol polyglycidyl ether type epoxy resin reacts, more specifically, a three-dimensional reaction occurs and a gel-like material having a greatly increased molecular weight is formed.

The polyphenol polyglycidyl ether type epoxy resin may be the one described in the description on the amine-modified epoxy resin (A), and the amount of use thereof is 0.5 to 4.0 mol based on the ketimine derivative.

The number-average molecular weight of the epoxy viscosity agent of the present invention is preferably in a range of 100,000 to 10,000,000. Due to the condition that the number-average molecular weight is 100,000 or more, a cured electrodeposition coating film having a good edge rust prevention property is obtained. On the other hand, due to the condition that the number-average molecular weight is 10,000,000 or less, it becomes easy to adjust the viscosity of the epoxy viscosity agent and possible to perform smooth synthesis, and it becomes easy to handle emulsification and dispersion of the resulting epoxy viscosity agent, and good stability thereof is obtained. The number-average molecular weight of the epoxy viscosity agent is more preferably in a range of 500,000 to 5,000,000.

The epoxy viscosity agent preferably has an amine value in a range of 10 to 100 mg KOH/g. Due to the condition that the amine value of the epoxy viscosity agent is 10 mg KOH/g or more, the aminated resin in an electrodeposition coating composition has good emulsification-dispersion stability. On the other hand, due to the condition that the amine value is 100 mg KOH/g or less, a proper number of amino groups are present in a cured electrodeposition coating film and a possibility to lower the water resistance of a coating film is eliminated. The amine value of the epoxy viscosity agent is more preferably in a range of 10 to 80 mg KOH/g.

The epoxy viscosity agent preferably has a hydroxyl value in a range of 100 to 300 mg KOH/g. Due to the condition that the hydroxyl value is 100 mg KOH/g or more, good curing of a cured electrodeposition coating film occurs and the coating film appearance is also improved. On the other hand, due to the condition that the hydroxyl value is 300 mg KOH/g or less, a proper number of hydroxyl groups remain in a cured electrodeposition coating film and a possibility to lower the water resistance of a coating film is eliminated. The hydroxyl value of the epoxy viscosity agent is more preferably in a range of 150 to 250 mg KOH/g.

In the present invention, the epoxy viscosity agent is specified by being produced by a production method comprising the above steps (1) to (3). The epoxy viscosity agent can be quantitatively expressed by the number-average molecular weight, the amine value, and the hydroxyl value as described above, but the quantitative expression cannot clarify the difference between conventional epoxy resins and the amine-modified product of the present invention. However, if the epoxy viscosity agent obtained by the production method of the present invention is blended in a cationic electrodeposition coating material, an effect of increasing the edge rust prevention property is obtained.

### <Blocked polyisocyanate curing agent (C)>

The blocked polyisocyanate curing agent (C) (hereinafter sometimes simply referred to as "curing agent") is a coating film-forming resin that constitutes an electrodeposition coating film. The blocked polyisocyanate curing agent can be prepared by blocking a polyisocyanate with an encapsulant.

Examples of the polyisocyanate include aliphatic diisocyanates such as hexamethylene diisocyanate (including a trimer), tetramethylene diisocyanate and trimethylhexamethylene diisocyanate; alicyclic polyisocianates such as isophorone diisocyanate and 4,4'-methylene-bis(cyclohexyl isocyanate); and aromatic diisocyanates such as 4,4'-diphenylmethane diisocyanate, tolylene diisocyanate and xylylene diisocyanate.

Examples of the encapsulant that may preferably be used include monohydric alkyl (or aromatic) alcohols such as n-butanol, n-hexyl alcohol, 2-ethylhexanol, lauryl alcohol, phenol carbinol and methylphenyl carbinol; cellosolves such as ethylene glycol monohexyl ether and ethylene glycol mono-2-ethylhexyl ether; polyether-type both-ended diols such as polyethylene glycol, polypropylene glycol and polytetramethylene ether glycol phenol; polyester-type both-ended polyols obtained from a diol such as ethylene glycol, propylene glycol or 1,4-butanediol and a dicarboxylic acid such as oxalic acid, succinic acid, adipic acid, suberic acid or sebacic acid; phenols such as para-t-butylphenol and cresol; oximes such as dimethyl ketoxime, methyl ethyl ketoxime, methyl isobutyl ketoxime, methyl amyl ketoxime and cyclohexanone oxime; and lactams typified by ε-caprolactam and γ-butyrolactam.

The blocking ratio of the blocked polyisocyanate curing agent is preferably 100%. This affords an advantage that the storage stability of the electrodeposition coating composition is improved.

As the blocked polyisocyanate curing agent, a curing agent prepared by blocking an aliphatic diisocyanate with an encapsulant and a curing agent prepared by blocking an aromatic diisocyanate with an encapsulant are preferably be used in combination.

The blocked polyisocyanate curing agent preferentially reacts with the primary amine of the aminated epoxy resin (A), and further reacts with a hydroxyl group to be cured. As the curing agent, at least one curing agent selected from the group consisting of organic curing agents such as melamine resin or phenol resin, silane coupling agents, and metal curing agents may be used in combination with the blocked isocyanate curing agent.

### <Preparation of resin emulsion>

The resin emulsion is formed by mixing the aminated epoxy resin (A), the epoxy viscosity agent (B), and the blocked polyisocyanate curing agent (C). When it is necessary to emulsify the components (A) to (C), the resin emulsion can be prepared by dissolving each of the components in an organic solvent to prepare solutions, mixing these solutions, and then neutralizing the mixture with a neutralizing acid. Examples of the neutralizing acid include organic acids such as methanesulfonic acid, sulfamic acid, lactic acid, dimethylol propionic acid, formic acid, and acetic acid. In the present invention, it is more preferable to neutralize the resin emulsion containing the aminated epoxy resin and the curing agent with one or more acids selected from the group consisting of formic acid, acetic acid, and lactic acid. Since the epoxy viscosity agent (B) is produced through the steps (1) to (3) described above, the epoxy viscosity agent (B) is in the form of an aqueous emulsion and can be mixed as it is.

The content of the epoxy viscosity agent (B) in the resin emulsion is an amount necessary for securing a superior edge rust prevention property of the obtained cationic electrodeposition coating composition. A preferable content of the epoxy viscosity agent (B) is 0.1 to 15 parts by mass and preferably 1.0 to 10.0 parts by mass in terms of resin solid content based on 100 parts by mass of the resin solid content of the amine-modified epoxy resin.

The content of the blocked polyisocyanate curing agent (C) is required be an amount sufficient for reacting with a primary amino group, a secondary amino group, or an active hydrogen-containing functional group such as a hydroxyl group in the aminated epoxy resin during curing to afford a good cured coating film. A preferred content of the blocked polyisocyanate curing agent (C) is in a range of 90/10 to 50/50, and more preferably 80/20 to 65/35, in terms of the solid mass ratio of the aminated epoxy resin to the curing agent (aminated epoxy resin/curing agent). By adjusting the solid mass ratio of the aminated epoxy resin and the blocked polyisocyanate curing agent, the fluidity and the curing rate of the coating film (deposited film) at the time of film formation are improved, and the coating film appearance is improved.

The solid content of the resin emulsion is usually 25 to 50% by mass, and preferably 35 to 45% by mass, based on the total amount of the resin emulsion. Here, the term "the solid content of a resin emulsion" means the mass of all components that are contained in the resin emulsion and remain in a solid form even after the removal of a solvent. Specifically, it means the total of the masses of the aminated epoxy resin, the curing agent, and other solid components optionally added, which are contained in the resin emulsion.

The neutralizing acid is more preferably used in an amount of 10 to 100%, even more preferably 20 to 70%, in the equivalent ratio of the neutralizing acid to the equivalent of the amino groups of the aminated epoxy resin. In the present description, the equivalent ratio of the neutralizing acid to the equivalent of the amino groups of the aminated epoxy resin is taken as the neutralization ratio. Due to the condition that the neutralization ratio is 10% or more, the affinity to water is secured and good dispersibility in water is obtained.

### <Pigment dispersion paste>

The cationic electrodeposition coating composition of the present invention may optionally contain a pigment dispersion paste. The pigment dispersion paste is a component that is optionally contained in an electrodeposition coating composition, and it commonly contains a pigment dispersion resin and a pigment.

### Pigment dispersion resin

The pigment dispersion resin is a resin for dispersing a pigment, and it is dispersed in an aqueous medium and then used. As the pigment dispersion resin, there can be used a pigment dispersion resin having a cationic group, such as a modified epoxy resin having at least one member selected from the group consisting of a quaternary ammonium group, a tertiary sulfonium group, and a primary amino group. Examples of the pigment dispersion resin include a quaternary ammonium group-containing epoxy resin and a tertiary sulfonium group-containing epoxy resin. As the aqueous solvent, ion-exchanged water or water containing a small amount of alcohol is used.

### Pigment

The pigment is a pigment that is commonly used in electrodeposition coating compositions. Examples of the pigment include inorganic pigments and organic pigments which are usually used, for example, coloring pigments such as titanium white (titanium dioxide), carbon black, and red iron oxide; extender pigments such as kaolin, talc, aluminum silicate, calcium carbonate, mica, and clay; and antirust pigments such as iron phosphate, aluminum phosphate, calcium phosphate, aluminum tripolyphosphate, aluminum phosphomolybdate, and aluminum zinc phosphomolybdate.

### Production of pigment dispersion paste

The pigment dispersion paste is prepared by mixing a pigment dispersion resin and a pigment. The content of the pigment dispersion resin in the pigment dispersion paste is not particularly limited, and the pigment dispersion resin can be used in an amount of 20 to 100 parts by mass in terms of resin solid content fraction per 100 parts by mass of the pigment.

The solid content of the pigment dispersion paste is preferably 40 to 70% by mass, particularly preferably 50 to 60% by mass, based on the total amount of the pigment dispersion paste.

The "solid content in a pigment dispersion paste" as referred to herein means the mass of all components contained in the pigment dispersion paste that remain in the form of solid even through removal of the solvent. Specifically, it means the total mass of the pigment dispersion resin, the pigment, and all other solid components optionally added that are contained in the pigment dispersion paste.

### <Other components>

The cationic electrodeposition coating composition of the present invention may further comprise a metal nitrite in addition to the above-described components. As the metal nitrite, a nitrite of an alkali metal or a nitrite of an alkaline earth metal is preferable, and a nitrite of an alkaline earth metal is more preferable. Examples of the metal nitrite include calcium nitrite, sodium nitrite, potassium nitrite, magnesium nitrite, strontium nitrite, barium nitrite, and zinc nitrite.

The inclusion of the metal nitrite in the cationic electrodeposition coating composition has an advantage that corrosion resistance is improved, and especially, the corrosion resistance of an edge part (edge rust prevention property) is further improved. When the cationic electrodeposition coating composition contains the metal nitrite, the content thereof is preferably 0.001 to 0.2% by mass in terms of metal element of the metal component relative to the total mass of the coating film-forming resin.

The metal nitrite may be added to the cationic electrodeposition coating composition by any method. For example, a method of preparing an aqueous solution of the metal nitrite in advance and then adding it to the cationic electrodeposition coating composition can be employed. Alternatively, the metal nitrite may be mixed with a pigment beforehand and then dispersed in the same manner as the pigment.

### <Production of cationic electrodeposition coating composition>

The cationic electrodeposition coating composition of the present invention can be prepared by mixing a resin emulsion comprising an aminated epoxy resin (A) and a blocked polyisocyanate curing agent (C), a resin emulsion comprising an epoxy viscosity agent (B), a pigment dispersion paste, and additives or the like by a commonly used method.

The "solid content of an electrodeposition coating composition" as referred to herein means the mass of all components contained in the electrodeposition coating composition that remain in the form of solid even through removal of the solvent. Specifically, that means the total of the solid masses of the aminated epoxy resin and the blocked polyisocyanate curing agent contained in the electrodeposition coating composition, and the pigment dispersion resin, the pigment, and other solid components, which are contained as necessary.

The solid content of the cationic electrodeposition coating composition of the present invention is preferably 1 to 30% by mass based on the total amount of the electrodeposition coating composition. When the solid content of the cationic electrodeposition coating composition is less than 1% by mass, a reduced amount of an electrodeposition coating film will be deposited, so that it may be difficult to secure sufficient corrosion resistance. When the solid content of the cationic electrodeposition coating composition exceeds 30% by mass, throwing power or coating film appearance may deteriorate.

The cationic electrodeposition coating composition of the present invention preferably has a pH of 4.5 to 7. When the pH of the cationic electrodeposition coating composition is less than 4.5, the amount of acid present in the cationic electrodeposition coating composition is excessive, so that coating film appearance or coating workability may be poor. On the other hand, when the pH exceeds 7, the filtration property of the cationic electrodeposition coating composition deteriorates, and the horizontal appearance of a cured electrodeposition coating film may deteriorate. The pH of the cationic electrodeposition coating composition can be set in the above range by adjusting the amount of a neutralizing acid to be used, the amount of a free acid to be added, etc. More preferably, the pH is 5 to 7.

The pH of the cationic electrodeposition coating composition can be measured using a commercially available pH meter having a temperature compensation function.

The milligram equivalent (MEQ (A)) of an acid per 100 g of the solid content of a cationic electrodeposition coating composition is preferably 40 to 120. The milligram equivalent (MEQ (A)) of an acid per 100 g of the resin solid content of the cationic electrodeposition coating composition can be adjusted by the amount of a neutralizing acid and the amount of a free acid.

MEQ (A) as referred to herein is an abbreviation of mg equivalent (acid), which is the sum total of mg equivalents of all acids per 100 g of the solid content of a coating material. The MEQ (A) can be measured by precisely weighing about 10 g of a solid of an electrodeposition coating composition, dissolving it in about 50 ml of a solvent (THF: tetrahydrofuran), then performing potentiometric titration using a 1/10 N NaOH solution and thereby determining the amount of an acid contained in the cationic electrodeposition coating composition.

The cationic electrodeposition coating composition of the present invention may optionally contain additives commonly used in the field of coating material, e.g., organic solvents such as ethylene glycol monobutyl ether, ethylene glycol monohexyl ether, ethylene glycol monoethylhexyl ether, propylene glycol monobutyl ether, dipropylene glycol monobutyl ether and propylene glycol monophenyl ether, drying inhibitors, surfactants such as antifoaming agents, viscosity modifiers such as acrylic resin fine particles, cissing inhibitors, inorganic anticorrosive agents such as vanadium salts, copper, iron, manganese, magnesium, and calcium salts. In addition to these, known auxiliary complexing agents, buffers, smoothing agents, stress relaxation agents, brighteners, semi-brighteners, antioxidants, ultraviolet absorbers, etc. may be blended according to the intended purpose. These additives may be added during the production of a resin emulsion or may be added during the production of a pigment dispersion paste or may be added during or after the mixing a resin emulsion and a pigment dispersion paste.

The cationic electrodeposition coating composition of the present invention may comprise other coating film-forming resin components in addition to the aminated epoxy resin. Examples of such other coating film-forming resin components include acrylic resins, polyester resins, urethane resins, butadiene resins, phenol resins, and xylene resins. As such other coating film-forming resin components that may be contained in the electrodeposition coating composition, phenol resins and xylene resins are preferable. Examples of the phenol resins and the xylene resins include xylene resins having 2 or more and 10 or less aromatic rings.

The deposited electrodeposition coating film of the cationic electrodeposition coating composition of the present invention is required to have a coating film viscosity at 110°C in a range of 5,000 to 1,000,000 mPa·s. In this description, the term "deposited electrodeposition coating film" refers to an electrodeposition coating film in an uncured state that is to be deposited on an article to be coated when the cationic electrodeposition coating composition is electrodeposited. For a deposited electrodeposition coating film, the temperature of 110°C can be regarded as a temperature that the electrodeposition coating film has just before the onset of the curing reaction of the coating film resin component contained in the film. The condition that the coating film viscosity of an electrodeposition coating film at 110°C under such temperature conditions is 1,000,000 mPa·s or less makes it possible to secure flow of the electrodeposition coating film by heating, and it is possible to avoid a cured electrodeposition coating film from being uneven in film thickness. In addition, the condition that the coating film viscosity is 5,000 mPa·s or more makes it possible to avoid problems such as excessive flowing of the electrodeposition coating film due to heating, and resulting flowing down. The coating film viscosity at 110°C is preferably in a range of 5,000 to 500,000 mPa·s, more preferably in a range of 5,000 to 100,000 mPa·s, and particular preferably in a range of 6,000 to 20,000 mPa·s.

The coating film viscosity at 110°C of a deposited electrodeposition coating film can be measured by the following procedure. An electrodeposition coating film is formed first by performing electrodeposition coating for 180 seconds on an article to be coated such that the resulting film comes to have a thickness of about 15 µm, and then the film is washed with water to remove an electrodeposition coating composition that has excessively adhered. Subsequently, excessive moisture adhering to the surface of the electrodeposition coating film is removed, and then the coating film is immediately taken out without drying, and thus a sample is prepared. By subjecting the thus-obtained sample to viscosity measurement by using a dynamic viscoelasticity measuring device, the coating film viscosity at 110°C can be measured.

### <Electrodeposition coating and formation of electrodeposition coating film>

By subjecting an article to be coated to electrodeposition coating using the cationic electrodeposition coating composition of the present invention, an electrodeposition coating film can be formed. In electrodeposition coating using the cationic electrodeposition coating composition of the present invention, an article to be coated is used as a cathode, and a voltage is applied between the cathode and an anode. As a result, an electrodeposition coating film is deposited on the article to be coated.

As an article to be coated with the cationic electrodeposition coating composition of the present invention, it is possible to use various materials which can be fed with electricity. Examples of the usable article to be coated include cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based steel sheets and tin-based plated steel sheets.

In an electrodeposition coating step, electrodeposition coating is performed by immersing an article to be coated in an electrodeposition coating composition, and then applying a voltage of 50 to 450 V. When the applied voltage is less than 50 V, electrodeposition may be insufficient, and when the applied voltage is more than 450 V, the coating film appearance may be poor. During electrodeposition coating, the bath liquid temperature of the coating composition is usually adjusted to 10 to 45°C.

The time for which the voltage is applied varies depending on electrodeposition conditions, and it may be generally 2 to 5 minutes.

In the electrodeposition coating using the cationic electrodeposition coating composition of the present invention, the thickness of the electrodeposition coating film to be deposited is preferably such that a thickness of the electrodeposition coating film finally obtained by heating and curing may preferably be 5 to 60 µm, more preferably 10 to 45 µm. If an electrodeposition coating film has a film thickness of less than 5 µm, the rust prevention property of the film may be insufficient.

The electrodeposition coating film deposited as described above can be cured by optionally washing it with water, and then heating it at, for example, 120 to 260°C, preferably 140 to 220°C, for 10 to 30 minutes. A cured electrodeposition coating film is thereby formed.

The cationic electrodeposition coating composition of the present invention affords an advantage that a cured electrodeposition coating film superior in edge part rust prevention property can be formed even when a cured electrodeposition coating film is formed on an article to be coated having an edge part. The cationic electrodeposition coating composition of the present invention has a function of forcing a deposited electrodeposition coating film to stay, and therefore, it can be used suitably in the case of forming a cured electrodeposition coating film on an article to be coated having an edge part.

In the present description, evaluation of the corrosion resistance of a cured electrodeposition coating film formed on an article to be coated having an edge part is perform by a salt water spray test (35°C × 72 hours) according to JIS Z2371 (2000). For example, when a cured electrodeposition coating film having a large film thickness, e.g., of 25 to 50 µm is subjected to a salt water spray test and the number of rust colonies formed at a coated edge part of the cured electrodeposition coating film formed on an article to be coated having an edge part is less than 3 colonies/cm² per 1 cm² of an edge part, the coating film is a coating film superior in corrosion resistance (rust prevention property) of the edge part, and when the number of rust colonies is less than 1 colony/ cm² per 1 cm² of an edge part, the coating film is a coating film excellent in corrosion resistance of the edge part.

### EXAMPLES

The present invention will be described hereafter in more detail by way of examples, to which the present invention is not intended to be limited. In the examples, "parts" and "%" are on a mass basis unless otherwise indicated.

### Production Example 1 Production of pigment dispersion resin

### Preparation of 2-ethylhexanol half-blocked isophorone diisocyanate

To a reaction vessel equipped with a stirring apparatus, a condenser tube, a nitrogen inlet tube and a thermometer was added 222.0 parts of isophorone diisocyanate (hereinafter, abbreviated as IPDI), and was diluted with 39.1 parts of methyl isobutyl ketone (MIBK), and 0.2 parts of dibutyltin dilaurate was added thereto. Thereafter, the mixture was heated to 50°C, and 131.5 parts of 2-ethylhexanol was then added dropwise under stirring in a dry nitrogen atmosphere over 2 hours, affording 2-ethylhexanol half-blocked IPDI (solid content: 90.0% by mass).

### Preparation of quaternization agent

To a reaction vessel were sequentially added 87.2 parts of dimethylethanolamine, 117.6 parts of a 75% lactic acid aqueous solution and 39.2 parts of ethylene glycol mono-n-butyl ether, and stirred at 65°C for 30 minutes, and thus a quaternization agent was prepared.

### Production of pigment dispersion resin

A reaction vessel was charged with 710.0 parts of a bisphenol A type epoxy resin (trade name: DER-331J, produced by The Dow Chemical Company) and 289.6 parts of bisphenol A, which were then reacted in a nitrogen atmosphere at 150 to 160°C for 1 hour, and then cooled to 120°C, and 498.8 parts of the previously prepared 2-ethylhexanol half-blocked IPDI (MIBK solution) was then added. The reaction mixture was stirred at 110 to 120°C for 1 hour, 463.4 parts of ethylene glycol mono-n-butyl ether was added, the mixture was cooled to 85 to 95°C, and 196.7 parts of the previously prepared quaternization agent was added. The reaction mixture was maintained at 85 to 95°C until the acid value thereof reached 1 mg KOH/g, and then 964 parts of deionized water was added to obtain the target epoxy resin (pigment dispersion resin) having a quaternary ammonium group (solid content: 50% by mass).

### Production Example 2 Production of aminated resin (A)

First, 92 parts of methyl isobutyl ketone, 940 parts of a bisphenol A type epoxy resin (trade name: DER-331J, produced by The Dow Chemical Company), 382 parts of bisphenol A, 63 parts of octylic acid and 2 parts of dimethylbenzylamine were added, and then were reacted until the epoxy equivalent was 1220 g/eq while the temperature in the reaction vessel was held at 140°C, and then cooling was performed until the temperature in the reaction vessel was 120°C. A mixture of 85 parts of diethylenetriamine (methyl isobutyl ketone solution having a solid content of 73%) and 80 parts of diethanolamine was then added, and reacted at 120°C for 1 hour, affording an aminated resin (cation-modified epoxy resin). The resin had a number-average molecular weight of 2,560, an amine value of 70 mg KOH/g (including an amine value derived from the primary amine of 42 mg KOH/g), and a hydroxyl value of 236 mg KOH/g.

### Production Example 3-1 Production of blocked isocyanate curing agent (C-1)

A reaction vessel was charged with 1680 parts of hexamethylene diisocyanate (HDI) and 732 parts of MIBK, and the mixture was heated to 60°C. A solution of 346 parts of trimethylolpropane in 1067 parts of MEK oxime was added thereto dropwise at 60°C over 2 hours. Further, the mixture was heated at 75°C for 4 hours, disappearance of an absorption based on an isocyanate group was then confirmed in IR spectrum measurement. The mixture was allowed to cool, and 27 parts of MIBK was then added, affording a blocked isocyanate curing agent (C-1) having a solid content of 78%. The isocyanate group value was 252 mg KOH/g.

### Production Example 3-2 Production of blocked isocyanate curing agent (C-2)

A reaction vessel was charged with 1340 parts of 4,4'-diphenylmethane diisocyanate and 277 parts of MIBK, which were then heated to 80°C, and a solution of 226 parts of ε-caprolactam in 944 parts of butyl cellosolve was then added dropwise at 80°C over 2 hours. Further, the mixture was heated at 100°C for 4 hours, disappearance of an absorption based on an isocyanate group was then confirmed in IR spectrum measurement, the mixture was allowed to cool, and 349 parts of MIBK was then added, affording a blocked isocyanate curing agent (B-2) (solid content: 80%). The isocyanate group value was 251 mg KOH/g.

### Production Example 4 Production of resin emulsion (1)

First, 350 parts (solid content) of the aminated resin (A) obtained in Production Example 2 was mixed with 75 parts (solid content) of the blocked isocyanate curing agent (C-1) obtained in Production Example 3-1 and 75 parts (solid content) of the blocked isocyanate curing agent (C-2) obtained in Production Example 3-2, and ethylene glycol mono-2-ethylhexyl ether was added in an amount of 3% (15 parts) based on the solid content. Next, the mixture was neutralized by adding formic acid in such a manner that the addition amount corresponded to a resin neutralization ratio of 40%, the mixture was slowly diluted by adding ion-exchanged water, and methyl isobutyl ketone was then removed under a reduced pressure so that the solid content was 40%, thereby affording a resin emulsion (1).

### Production Example 5-1 Production of epoxy viscosity agent (B-1)

### Chain extension step

First, 940 parts of a bisphenol A type epoxy resin (trade name: DER-331J, produced by The Dow Chemical Company), 388 parts of bisphenol A, and 5.10 parts of dimethylbenzylamine were added, then 79 parts of butyl cellosolve and 79 parts of ethylene glycol mono-2-ethylhexyl ether were added, and then the mixture was reacted until the epoxy equivalent reached 1083 g/eq while the temperature in the reaction vessel was held at 160°C, and then cooled until the temperature in the reaction vessel reached 120°C. The time required to reach the target epoxy equivalent was 5.5 hours.

### Amine modification step/dispersion step

A mixture (amine compound) of 258 parts of diethylenetriamine (methyl isobutyl ketone solution having a solid content of 73%: diketimine), 21 parts of N-methylethanolamine, and 45 parts of diethanolamine (DETA) was then added, and reacted at 120°C for 1 hour, affording an amine-modified epoxy resin. After cooling to 90°C, the amine-modified epoxy resin was acid-neutralized by adding ion-exchanged water and acetic acid such that the neutralization ratio would be 50%. Then, ion-exchanged water was added to dilute and disperse that to a solid content of 20%.

### High molecular weight achievement step

Thereafter, 188 parts of bisphenol A type epoxy resin (trade name: DER-331J, produced by The Dow Chemical Company) (in an amount of 1.4 mol relative to 1 mol of the ketimine derivative) was added and reacted at 90°C for 3 hours. Methyl isobutyl ketone was removed under reduced pressure, affording an epoxy viscosity agent (B-1) having a solid content of 20%. The formulation is shown in Table 2.

### Production Example 5-2 Production of epoxy viscosity agent (B-2)

An epoxy viscosity agent (B-2) was obtained in the same manner as in Production Example 5-1 except that the amount of dimethylbenzylamine in the etherification step was changed to 4.0 parts and the target epoxy equivalent was set to 958 g/eq. The time required to reach the target epoxy equivalent was 5.5 hours.

### Production Example 5-3 Production of epoxy viscosity agent (B-3)

An epoxy viscosity agent (B-3) was obtained in the same manner as in Production Example 5-1 except that the amount of dimethylbenzylamine in the etherification step was changed to 7.3 parts and the target epoxy equivalent was set to 1166 g/eq. The time required to reach the target epoxy equivalent was 7 hours.

### Production Example 5-4 Production of epoxy viscosity agent (B-4)

An epoxy viscosity agent (B-4) was obtained in the same manner as in Production Example 5-1 except that the amount of dimethylbenzylamine in the etherification step was changed to 4.1 parts. The time required to reach the target epoxy equivalent was 7 hours.

### Production Example 5-5 Production of epoxy viscosity agent (B-5)

An epoxy viscosity agent (B-5) was obtained in the same manner as in Production Example 5-1 except that the reaction temperature in the etherification step was changed to 180°C. The time required to reach the target epoxy equivalent was 6.5 hours.

### Production Example 5-5 Production of epoxy viscosity agent (B-6)

An epoxy viscosity agent (B-6) was obtained in the same manner as in Production Example 5-1 except that the amounts of methylmethanolamine and diethanolamine in the amination step were changed to 5 parts and 68 parts, respectively. The time required to reach the target epoxy equivalent was 5.5 hours.

### Production Example 5-7 Production of epoxy viscosity agent (B-7)

An epoxy viscosity agent (B-7) was obtained in the same manner as in Production Example 5-1 except that the amount of bisphenol A was changed to 211 parts and 334.7 parts of an ethylene oxide-containing epoxy resin (trade name: NEWPOL BPE-60, produced by Sanyo Chemical Industries, Ltd.) was further added in the etherification step, and the amounts of diketimine, methylmethanolamine, and diethanolamine in the amination step were changed to 289 parts, 24 parts, and 51 parts, respectively. The time required to reach the target epoxy equivalent was 5.5 hours.

### Production Example 5-8 Production of epoxy viscosity agent (B-8)

An epoxy viscosity agent (B-8) was obtained in the same manner as in Production Example 5-1 except that in the etherification step, the amount of dimethylbenzylamine was changed to 2.0 parts, the reaction temperature was changed to 140°C, and the target epoxy equivalent was set to 800 g/eq. The time required to reach the target epoxy equivalent was 3.0 hours.

### Production Example 5-9 Production of epoxy viscosity agent (B-9)

An epoxy viscosity agent (B-9) was obtained in the same manner as in Production Example 5-1 except that in the etherification step, the amount of dimethylbenzylamine was changed to 2.0 parts, the reaction temperature was changed to 140°C, and the target epoxy equivalent was set to 800 g/eq, and in the amination step, the amounts of methylmethanolamine and diethanolamine were changed to 54 parts and 0 parts, respectively. The time required to reach the target epoxy equivalent was 3.0 hours.

### Production Example 5-10 Production of epoxy viscosity agent (B-10)

An epoxy viscosity agent (B-10) was obtained in the same manner as in Production Example 5-1 except that the amount of dimethylbenzylamine in the etherification step was changed to 9.3 parts, the reaction temperature was changed to 180°C, and the target epoxy equivalent was changed to 1335 g/eq. The time required to reach the target epoxy equivalent was 10.0 hours.

### Production Example 5-11 Production of epoxy viscosity agent (B-11)

The synthesis of an epoxy viscosity agent was tried in the same manner as in Production Example 5-1 except that in the etherification step, the amount of dimethylbenzylamine was changed to 10.2 parts, the reaction temperature was changed to 180°C, and the target epoxy equivalent was changed to 1540 g/eq. However, the reaction product was gelled in the amination step. The time required to reach the target epoxy equivalent was 12.0 hours.

### Example 1

### Production of pigment dispersion paste for cationic electrodeposition coating material

Using a sand mill, the mixture obtained on the basis of the compounding shown in the following Table 1 including the pigment dispersion resin obtained in Production Example 1 was dispersed at 40°C to have a volume-average particle size D50 of 0.6 µm, and thus a pigment dispersion paste (solid content: 50%) was obtained. As to the measurement of a volume-average particle diameter D50, the volume-average particle size D50 was measured with a dispersion diluted with ion-exchanged water such that an appropriate signal level is attained using a laser Doppler type particle size analyzer ("Microtrac UPA150" manufactured by Nikkiso Co., Ltd.).

**[Table 1]**

| | |
|---|---|
| Pigment dispersion resin of Example 1 | 61.6 |
| Carbon black | 5 |
| Dioctyl tin oxide | 16 |
| Calcined kaolin | 95 |
| Deionized water | 116 |

To a stainless steel container were added 1997 parts of ion-exchanged water, 1539 parts of the resin emulsion (1) of Production Example 4, 464 parts of the pigment dispersion paste prepared above, and 195 parts (an amount of 6% by mass as a resin solid content relative to the total of the resin solid content of the resin emulsion and the resin solid content of the epoxy viscosity agent) of the epoxy viscosity agent (B-1) obtained in Production Example 5-1, which were then mixed and aged at 40°C for 16 hours, and thus a cationic electrodeposition coating composition was obtained.

### Examples 2 to 7 and Comparative Examples 1 to 4

Cationic electrodeposition coating compositions were obtained in the same manner as in Example 1 except that the epoxy viscosity agent (B-1) was changed to epoxy viscosity agent (B-2) to epoxy viscosity agent (B-11) shown in Table 2. The obtained cationic electrodeposition coating compositions were evaluated for four items, namely, coating film appearance, edge part rust prevention property, manufacturability of an epoxy viscosity agent, and storage stability of an epoxy viscosity agent, by the evaluation methods described below. The results are shown in Table 3. In Table 3 are also disclosed the proportion (%) of a fraction with a molecular weight of 100,000 or more in the resin solid component after chain extension of the epoxy viscosity agent after etherification, the weight ratio of diethanolamine/diketimine, the % by weight of diketimine/all amine compounds, and the % by weight of diethanolamine/all amine compounds.

### Formation of cured electrodeposition coating film

A cold-rolled steel sheet (JIS G3141, SPCC-SD) was immersed in SURFCLEANER EC90 (produced by Nippon Paint Surf Chemicals Co., Ltd.) at 50°C for 2 minutes, thereby being degreased. Next, the steel sheet was immersed in SURFFINE GL1 (produced by Nippon Paint Surf Chemicals Co., Ltd.) at room temperature for 30 seconds, and immersed in SURFDYNE EC3200 (produced by Nippon Paint Surfchemicals, Zirconium conversion agent) at 35°C for 2 minutes. The steel sheet was then rinsed with deionized water.

To the cationic electrodeposition coating composition obtained above, a required amount of 2-ethylhexyl glycol was added such that the electrodeposition coating film had a thickness of 40 µm after curing. Thereafter, the steel sheet was fully embedded in the electrodeposition coating composition, and application of a voltage was then immediately started. The voltage was applied under such a condition that the voltage was raised for 30 seconds to 180 V, and the steel sheet was held for 150 seconds. Thus, an uncured electrodeposition coating film was deposited on the article to be coated (cold-rolled steel sheet). The resulting uncured electrodeposition coating film was heated and cured at 160°C for 15 minutes, affording an electrodeposition coated sheet having a cured electrodeposition coating film having a film thickness of 40 µm.

### Evaluation of coating film appearance of cured electrodeposition coating film

The surface roughness of the obtained cured electrodeposition coating film was found by measuring the arithmetic average roughness (Ra) of a roughness curve according to JIS B0601 by using an Evaluation type Surface Roughness Measurement Instrument (SURFTEST SJ-201P, manufactured by Mitutoyo Corporation). A sample with 2.5-mm-width cut-off (number of partitions: 5) was subjected to measurement seven times to give Ra values in terms of top/bottom-trimmed mean. It may be said that a smaller Ra value leads to less surface irregularities and a better coating film appearance.

### Evaluation criteria

∘: Ra is less than 0.50.
∘△: Ra is 0.50 or more and less than 1.00.
△: Ra is 1.00 or more and less than 1.50.
△×: Ra is 1.50 or more and less than 2.00.
×: Ra is 2.0 or more.

### Evaluation of edge part rust prevention property

Degreasing treatment, surface treatment, and chemical conversion were performed in the same procedures as described above, except that the article to be coated was changed from a cold-rolled steel sheet (JIS G3141, SPCC-SD) to an L-type exclusive spare blade (LB10K: manufactured by OLFA Corporation, length: 100 mm, width: 18 mm, thickness: 0.5 mm).

Subsequently, a cured electrodeposition coating film was provided in the same procedure as in the formation of the cured electrodeposition coating film (1) and thus a cured electrodeposition coating film having a thickness of 40 µm was provided on the article to be coated having an edge part (an L-type exclusive spare blade), and thus a specimen was obtained.

The test piece was subjected to a salt water spray test (35°C x 72 hours) in accordance with JIS Z2371 (2000), and the number of rust colonies formed at a tip of the L-type exclusive spare blade was examined.

In this test, "a tip of an L-type exclusive spare blade" means a width of 5 mm from the top of the blade along the blade body direction. The width includes both the front surface side and the back surface side, and the front and back surfaces have a width of 10 mm in total. The "tip of an L-type exclusive spare blade" corresponds to the "edge part" referred to herein.

For example, in the following evaluation, when the number of rust colonies formed at the tip of the L-type exclusive spare blade is 30, since the length of the L-type exclusive spare blade is 100 mm (10 cm) and the width of the tip of the L-type exclusive spare blade is 10 mm in total (1 cm in width) on the front and back surfaces, the number of rust colonies per 1 cm² of the tip of the L-type exclusive blade is 30 colonies/ 10 cm² = 3 colonies/cm². In the following evaluation, those with ∘△ or more are regarded as pass.

### Evaluation criteria

⊙: No rust was formed.
∘: The number of rusts is less than 10.
   (In terms of the number of rust colonies per 1 cm² of a tip of an L-type exclusive spare blade, less than 1 colony/cm².)
∘△: The number of rusts is 10 or more and less than 30.
   (In terms of the number of rust colonies per 1 cm² of a tip of an L-type exclusive spare blade, 1 or more colonies/cm² and less than 3 colonies cm².)
△: The number of rusts is 30 or more and less than 50.
   (In terms of the number of rust colonies per 1 cm² of a tip of an L-type exclusive spare blade, 3 or more colonies/cm² and less than 5 colonies/cm².)
△×: The number of rusts is 50 or more and less than 100.
   (In terms of the number of rust colonies per 1 cm² of a tip of an L-type exclusive spare blade, 5 or more colonies/cm² and less than 10 colonies/cm².)
×: The number of rusts is 100 or more.
   (In terms of the number of rust colonies per 1 cm² of a tip of an L-type exclusive spare blade, 10 or more colonies/cm².)

### Manufacturability of epoxy viscosity agent

The viscosity of the resin at the end point of amination was measured using Rheosol-G3000 (manufactured by UBM Co., Ltd.), and a temperature viscosity curve from 90°C to 120°C was obtained. The manufacturability was evaluated on the basis of a viscosity at 100°C. After the amination, it is necessary to lower the temperature of the amine-modified epoxy resin to 100°C in order to neutralize the amine-modified epoxy resin with an acid and dilute the amine-modified epoxy resin with ion-exchanged water. At this time, if the viscosity is 30,000 mPa·s or more, a load is applied to equipment.

### Evaluation criteria

o: The resin viscosity at 100°C is 25000 mPa·s or less.
∘△: The resin viscosity at 100 °C is more than 25000 mPa·s and not more than 27500 mPa·s.
△: The resin viscosity at 100 °C is more than 27500 mPa·s and not more than 30,000 mPa·s.
×: The resin viscosity at 100°C is more than 30,000 mPa·s.

### Storage stability (stability) of epoxy viscosity agent

The state in which the epoxy viscosity agent was left to stand in a thermostatic chamber at 40°C for 4 weeks was visually confirmed, and the viscosity was measured with a B-type viscometer to evaluate the stability. The evaluation criteria were as follows.

### Evaluation criteria

o: No precipitation is visually found, and the increase in viscosity is 10 cps or less as compared with the initial stage of synthesis.
∘△: No precipitation is visually found, and the increase in viscosity is more than 10 cps and not more than -50 cps as compared with the initial stage of synthesis.
△: No precipitation is visually found, and the increase in viscosity is more than 50 cps and not more than -100 cps as compared with the initial stage of synthesis.
×: No precipitation is visually found, and the increase in viscosity is larger than 100 cps as compared with the initial stage of synthesis.

**[Table 2]**

| | | | Production Example No. | | | | | | | | | | |
|---|---|---|---|---|---|---|---|---|---|---|---|---|---|
| Process | Name of starting materials, conditions, etc. | | 5-1 | 5-2 | 5-3 | 5-4 | 5-5 | 5-6 | 5-7 | 5-8 | 5-9 | 5-10 | 5-11 |
| Etherification (chain extension) | Bisphenol A type epoxy resin | part | 940 | 940 | 940 | 940 | 940 | 940 | 940 | 940 | 940 | 940 | 940 |
| | Polyethylene oxide-containing epoxy resin | part | 0 | 0 | 0 | 0 | 0 | 0 | 334 | 0 | 0 | 0 | 0 |
| | Bisphenol A | part | 388 | 388 | 388 | 388 | 388 | 388 | 211 | 388 | 388 | 388 | 388 |
| | Dimethylbenzylamine | part | 5.10 | 4.00 | 7.30 | 4.00 | 5.10 | 5.10 | 5.10 | 2.00 | 2.00 | 9.30 | 10.20 |
| | Chain extension reaction temperature °C | part | 160 | 160 | 160 | 160 | 180 | 160 | 160 | 140 | 140 | 180 | 180 |
| | Chain extension reaction time | hour | 5.5 | 5.5 | 7 | 7 | 6.5 | 5.5 | 5.5 | 3 | 3 | 10 | 12 |
| | Epoxy equivalent g/eq | g/eq | 1083 | 958 | 1166 | 1083 | 1083 | 1083 | 1083 | 800 | 800 | 1335 | 1540 |
| Amine modification step | Diketimine | part | 258 | 258 | 258 | 258 | 258 | 258 | 289 | 258 | 258 | 258 | 258 |
| | Methylethanolamine | part | 21 | 21 | 21 | 21 | 21 | 5 | 24 | 21 | 54 | 21 | 21 |
| | Diethanolamine | part | 45 | 45 | 45 | 45 | 45 | 68 | 51 | 45 | 0 | 45 | 45 |
| | Diketimine ratio | % | 50 | 50 | 50 | 50 | 50 | 50 | 50 | 50 | 50 | 50 | 50 |
| | Amination temperature | °C | 120 | 120 | 120 | 120 | 120 | 120 | 120 | 120 | 120 | 120 | 120 |
| | Amination time | hour | 1 | 1 | 1 | 1 | 1 | 1 | 1 | 1 | 1 | 1 | 1 |
| Emulsification (dispersion step) | Neutralizing acid | | Acetic acid | Acetic acid | Acetic acid | Acetic acid | Acetic acid | Acetic acid | Acetic acid | Acetic acid | Acetic acid | Acetic acid | Acetic acid |
| | Neutralization ratio | % | 50 | 50 | 50 | 50 | 50 | 50 | 50 | 50 | 50 | 50 | 50 |
| High molecular weight achievement step | Epoxy resin | part | 188 | 188 | 188 | 188 | 188 | 188 | 188 | 188 | 188 | 188 | 188 |
| | Epoxy/ketimine ratio | mol | 1.4 | 1.4 | 1.4 | 1.4 | 1.4 | 1.4 | 1.4 | 1.4 | 1.4 | 1.4 | 1.4 |
| | Reaction temperature | °C | 90 | 90 | 90 | 90 | 90 | 90 | 90 | 90 | 90 | 90 | 90 |
| | Gelation time | hour | 3 | 3 | 3 | 3 | 3 | 3 | 3 | 3 | 3 | 3 | 3 |

**[Table 3]**

| | | Example 1 | Example 2 | Example 3 | Example 4 | Example 5 | Example 6 | Example 7 | Comparati ve Example 1 | Comparati ve Example 2 | Comparati ve Example 3 | Comparati ve Example 4 |
|---|---|---|---|---|---|---|---|---|---|---|---|---|
| Epoxy viscosity agent (B) | | (B-1) | (B-2) | (B-3) | (B-4) | (B-5) | (B-6) | (B-7) | (B-8) | (B-9) | (B-10) | (B-11) |
| Proportion of a fraction with a molecular weight of 100,000 or more in the resin solid component after chain extension after etherification | % | 15.3 | 13.2 | 17.8 | 14.8 | 14.5 | 14.1 | 15.6 | 2.5 | 2.5 | 22.1 | 26.5 |
| Diethanolamine/diketimine weight ratio | | 0.17441 9 | 0.17441 9 | 0.17441 9 | 0.17441 9 | 0.17441 9 | 0.26356 6 | 0.17441 9 | 0.174419 | 0 | 0.174419 | 0.174419 |
| Diketimine/all amine compounds | % | 50 | 50 | 50 | 50 | 50 | 50 | 50 | 50 | 50 | 50 | 50 |
| Diethanolamine/all amine compounds | % | 30 | 30 | 30 | 30 | 30 | 45 | 30 | 30 | 0 | 30 | 30 |
| Coating film appearance | | ○ | ○ | ○△ | ○ | ○ | ○△ | ○ | ○ | ○ | △× | - |
| Edge part rust prevention property | | ○ | ○△ | ○ | ○ | ○ | ⊙ | ⊙ | △ | △× | × | - |
| Manufacturability of epoxy viscosity agent | | ○ | ○ | ○△ | ○ | ○ | ○ | ○ | ○ | ○ | △ | × |
| Storage stability of epoxy viscosity agent | | ○ | ○ | ○△ | ○ | ○ | ○ | ○ | ○ | ○ | × | - |

As is apparent from the results in Table 3 above, in Examples 1 to 7 in which the proportion of a fraction with a molecular weight (relative molecular weight by gel permeation chromatography) of 100,000 or more in the resin solid component after chain extension after etherification is between 13.0 and 18.0% by mass in the present invention, the edge part rust prevention property is superior. In contrast, when the proportion of the molecular weight (relative molecular weight) of 100,000 or more deviates from the range of 13.0 to 18.0% by mass as in Comparative Examples 1 to 4, the edge part rust prevention property is not sufficient, and the coating film appearance is also deteriorated. In addition, the manufacturability and storage stability of an epoxy viscosity agent are deteriorated.

## Claims

1. A method for producing an epoxy viscosity agent for a cationic electrodeposition coating material, the method comprising:
(1) an amine modification step of obtaining an amine-modified epoxy resin by reacting an amine compound with a chain-extended epoxy resin that is obtained by chain-extending a polyphenol polyglycidyl ether type epoxy resin and that has a proportion of a fraction having a relative molecular weight of 100,000 or more determined by gel permeation chromatography (GPC) of 13.0 to 18.0% by mass;
(2) a dispersion step of neutralizing some or all of the amino groups of the resulting amine-modified epoxy resin with an acid and dispersing the resin in a water solvent; and
(3) a high molecular weight achievement step of mixing and reacting the resulting dispersion with a polyphenol polyglycidyl ether type epoxy resin to obtain an epoxy viscosity agent.

2. The production method according to claim 1, wherein the amine compound comprises a secondary amine and a ketimine derivative, a weight ratio of the secondary amine/all amine compounds is 0.20 to 0.50, and a weight ratio of the ketimine derivative/all amine compounds is 0.30 to 0.80.

3. The production method according to claim 1 or 2, wherein the chain-extended epoxy resin to be reacted with the amine compound in the amine modification step (1) is one obtained by chain-extending a polyphenol polyglycidyl ether type epoxy resin with a polycyclic phenol compound.

4. The production method according to claim 1 or 2, wherein the chain-extended epoxy resin to be reacted with an amine compound in the amine modification step (1) is a resin obtained by chain-extending a polyphenol polyglycidyl ether type epoxy resin with a polycyclic phenol compound and a polyethylene oxide group-containing epoxy resin, and
the amount of a polypropylene oxide group-containing epoxy resin contained in 100 parts by mass of the chain-extended epoxy resin is 1 to 40 parts by mass.

5. A cationic electrodeposition coating composition comprising an aminated epoxy resin (A), the epoxy viscosity agent (B) according to claim 1, and a blocked polyisocyanate curing agent (C).

## Patentansprüche

1. Verfahren zur Herstellung eines Epoxy-Viskositätsmittels für ein kationisches Elektroabscheidungsbeschichtungsmaterial, wobei das Verfahren Folgendes umfasst:
(1) einen Aminmodifikationsschritt des Erhaltens eines Amin-modifizierten Epoxidharzes durch Umsetzen einer Aminverbindung mit einem kettenverlängerten Epoxidharz, das durch Kettenverlängerung eines Epoxidharzes vom Polyphenolpolyglycidylethertyp erhalten wird und einen Anteil einer Fraktion mit einem relativen Molekulargewicht von 100.000 oder mehr, bestimmt durch Gelpermeationschromatographie (GPC), von 13,0 bis 18,0 Massen-% aufweist;
(2) einen Dispersionsschritt des Neutralisierens einiger oder aller Aminogruppen des resultierenden Amin-modifizierten Epoxidharzes mit einer Säure und des Dispergierens des Harzes in einem Wasserlösungsmittel; und
(3) einen Schritt des Erzielens eines hohen Molekulargewichts des Vermischens und Umsetzens der resultierenden Dispersion mit einem Epoxidharz vom Polyphenolpolyglycidylethertyp, um ein Epoxy-Viskositätsmittel zu erhalten.

2. Herstellungsverfahren nach Anspruch 1, wobei die Aminverbindung ein sekundäres Amin und ein Ketimin-Derivat, ein Gewichtsverhältnis des sekundären Amins/aller Aminverbindungen von 0,20 bis 0,50 und ein Gewichtsverhältnis des Ketimin-Derivats/aller Aminverbindungen von 0,30 bis 0,80 umfasst.

3. Herstellungsverfahren nach Anspruch 1 oder 2, wobei das kettenverlängerte Epoxidharz, das in dem Aminmodifikationsschritt (1) mit der Aminverbindung umzusetzen ist, eines ist, das durch Kettenverlängerung eines Epoxidharzes vom Polyphenolpolyglycidylethertyp mit einer polyzyklischen Phenolverbindung erhalten wird.

4. Produktionsverfahren nach Anspruch 1 oder 2, wobei das kettenverlängerte Epoxidharz, das in dem Aminmodifikationsschritt (1) mit einer Aminverbindung umzusetzen ist, ein Harz ist, das durch Kettenverlängerung eines Epoxidharzes vom Polyphenolpolyglycidylethertyp mit einer polyzyklischen Phenolverbindung und einem Polyethylenoxidgruppe-enthaltenden Epoxidharz erhalten wird, und
die Menge eines Polypropylenoxidgruppe-enthaltenden Epoxidharzes, das in 100 Massenteilen des kettenverlängerten Epoxidharzes enthalten ist, 1 bis 40 Massenteile beträgt.

5. Kationische Elektroabscheidungsbeschichtungszusammensetzung, umfassend ein aminiertes Epoxidharz (A), ein Epoxidviskositätsmittel (B) nach Anspruch 1 und ein geblocktes Polyisocyanat-Härtungsmittel (C).

## Revendications

1. Procédé de production d'un agent de viscosité époxy pour un matériau de revêtement par électrodéposition cationique, le procédé comprenant les étapes consistant à :
(1) une étape de modification par amine consistant à obtenir une résine époxy modifiée par une amine en faisant réagir un composé amine avec une résine époxy à chaîne étendue qui est obtenue par extension de chaîne d'une résine époxy de type éther polyglycidylique de polyphénol et qui présente une proportion d'une fraction présentant un poids moléculaire relatif de 100 000 ou plus déterminée par chromatographie par perméation de gel (GPC) de 13,0 à 18,0 % en masse ;
(2) une étape de dispersion consistant à neutraliser certains ou tous les groupes amino de la résine époxy modifiée par une amine résultante avec un acide et à disperser la résine dans un solvant aqueux ; et
(3) une étape d'obtention d'un poids moléculaire élevé consistant à mélanger et à faire réagir la dispersion résultante avec une résine époxy de type éther polyglycidylique de polyphénol pour obtenir un agent de viscosité époxy.

2. Procédé de production selon la revendication 1, dans lequel le composé amine comprend une amine secondaire et un dérivé de cétimine, un rapport pondéral de l'amine secondaire/tous les composés amine est de 0,20 à 0,50, et un rapport pondéral du dérivé de cétimine/tous les composés amine est de 0,30 à 0,80.

3. Procédé de production selon la revendication 1 ou 2, dans lequel la résine époxy à chaîne étendue à faire réagir avec le composé amine dans l'étape de modification d'amine (1) est une résine obtenue par extension de chaîne d'une résine époxy de type éther polyglycidylique de polyphénol avec un composé de phénol polycyclique.

4. Procédé de production selon la revendication 1 ou 2, dans lequel la résine époxy à chaîne étendue mise à réagir avec un composé amine dans l'étape de modification par amine (1) est une résine obtenue par extension de chaîne d'une résine époxy de type éther polyglycidylique de polyphénol avec un composé phénolique polycyclique et une résine époxy contenant un groupe oxyde de polyéthylène, et la quantité d'une résine époxy contenant un groupe oxyde de polypropylène contenue dans 100 parties en masse de la résine époxy à chaîne étendue est de 1 à 40 parties en masse.

5. Composition de revêtement par électrodéposition cationique comprenant une résine époxy aminée (A), l'agent de viscosité époxy (B) selon la revendication 1, et un agent de durcissement polyisocyanate bloqué (C).
